# EUROPEAN PATENT APPLICATION

(11) **EP 1 950 075 A1**
(43) Date of publication of application: **30.07.2008**
(21) Application number: 06805066.5
(22) Date of filing: 25.10.2006
(51) Int. Cl.: B60K 17/08, F16H 61/00

(54) **MAIN SECTION AND AUXILIARY SECTION TYPE DUAL-COUNTERSHAFT TWELVE-SPEED TRANSMISSION FOR VEHICLE**

(30) Priority: 28.10.2005 CN 200520079599 U
(71) Applicant: Shaanxi Fast Gear Co., Ltd, Shaanxi 710077 (CN)
(72) Inventor: YANG, Lin, Shaanxi 710077 (CN); WANG, Shunli, Shaanxi 710077 (CN); SUN, Zhijin, Shaanxi 710077 (CN)
(74) Representative: Albrecht, Rainer Harald
(86) International application number: PCT/CN2006/002861
(87) International publication number: WO 2007/048342

(57) **Abstract**

This invention relates to a main-box-and-auxiliary-box-structural twin-countershaft twelve-speed transmission, with a main box and an auxiliary box mainly. Said main box has an input shaft (1), a main shaft (10) and two countershafts (14) arranged symmetrically at the two sides of the main shaft, there being provided corresponding gear drive between the main shaft and the countershafts, there being provided six gears positioned independently and three synchronizers (4) on the main shaft, shift forks (5) for the synchronizers are connected to a shift lever via shift fork shafts (16) and via an operation mechanism. The auxiliary box has an auxiliary-box main shaft (20) and an auxiliary-box countershaft (22), a gear (29) engaging with a gear (28), a gear (25) engaging with a shaft gear (30), between the gear (25) and the gear (29) being arranged a synchronizer (9), a shift fork (15) and a shift fork shaft (31), said synchronizer (9) being self-locked by means of back taper teeth, and said shift fork shaft (31) being self-locked by means of a self locking mechanism comprising a spring (18) and a steel ball (19).

## Description

### Field of the Invention

This invention relates to a mechanical transmission for vehicles, in particular a main-box-and-auxiliary-box-structural twin-countershaft twelve-speed transmission.

### Background of the Invention

The main box of twin-countershaft transmissions in the prior art is provided with synchronizers or not, and their auxiliary box is shifted by means of a synchronizer and furthermore is operated electrically or pneumatically. The use of synchronizers can reduce gearshifting forces and enhance the driving comfort. At present, main-box-and-auxiliary-box-structural twin-countershaft transmissions provide no more than ten speeds, wherein the main box provides four or five speeds and the auxiliary box provides two speeds. Thus, the speed ratio range is narrow and the speed ratio spans are big, and hence the oil consumption is high. Besides, the gears on the main shaft in the main box are positioned dependently, that is to say, they are held by a spline gasket on one side and rest on an adjacent gear on the other side respectively, so that the relative position between synchronizers and gears are not so precise, and hence the transmission performance isn't good enough and thus sound noises are generalized, and as a result the synchronizers are easy to be burn out, and thus the lives of the synchronizers are short. Besides, most congeneric transmissions are not provided with a self-locking mechanism for their auxiliary box, or only with a single self-locking mechanism for locking the gears of their auxiliary box. Such arrangements may result in loss of gears and hence a bad security.

### Summary of the Invention

The technical problem on which the invention is based is to resolve the above-mentioned problems in the prior art, and thus there is provided a main-box-and-auxiliary-box-structural twin-countershaft twelve-speed transmission to satisfy the requirements in the automobile engineering.

The technical problem is resolved by a main-box-and-auxiliary-box-structural twin-countershaft twelve-speed transmission, comprising mainly a main box and an auxiliary box, said main box having an input shaft (an input-shaft gear is arranged on the input shaft) and a main shaft as well as two identical countershafts which are arranged symmetrically on both sides of the main shaft, the gear on the input shaft engaging with drive gears on the countershafts, and other gears on the countershafts engaging with corresponding gears on the main shaft, three synchronizers being arranged on the main shaft, the gears on the main shaft being arranged on both sides of the synchronizers respectively, a spline gasket and a space gasket being arranged on the left and the right sides of each gear respectively, so that the gears are positioned independently, said synchronizers being provided with a shift fork respectively, and the shift fork shaft is connected to a shift lever via an operation mechanism, said auxiliary box having mainly an auxiliary-box main shaft and an auxiliary-box countershaft, a drive gear for the auxiliary box on the main shaft of the main box engaging with a drive gear on the auxiliary-box countershaft, and a shaft gear on the countershaft engaging with a reduction gear on the auxiliary-box main shaft, there being provided a synchronizer between the reduction gear and the drive gear, said synchronizer being provided with a shift fork and a shift fork shaft, the auxiliary-box main shaft being connected with a flange disc at its other end. The auxiliary box is provided with double self-locking mechanisms for locking its gears, namely a back-taper-tooth self-locking mechanism arranged on the synchronizer and a self-locking mechanism comprising a self-locking spring arranged in the shift fork shaft and a self-locking steel ball.

The invention provides the following advantages: more speeds, wider speed ratio range, smaller speed ratio spans, higher fuel economy; friction moments are enhanced, the lives of the synchronizers are improved, the gearshifting forces are lowered, the intensity of drivers is reduced, and the driving comfort is advanced, since twin cone lock ring synchronizers are arranged on the main shaft; the transmission runs stably and thus sends out lower noises, since the gears in the main box are designed as fine-tooth gears and are positioned independently; the transmission is operated in a manner of a single H, thus the speeds are felt clearly, and thus the gearshifting is advantageous; the auxiliary box is double self-locked, so that loss of gears is prevented, and hence the driving security is ensured.

### Brief Description of the Drawings

Figure 1 shows a transmission according to the present invention in an axial section (one of the countershaft aggregates and intermediate gears for the reverse gear are omitted.)
Figure 2 shows the inner structure of the auxiliary box of the transmission according to the present invention schematically.

### Description of Illustrated Embodiments

The whole structure of the transmission in the present invention and its operation process are described in details with reference to the drawings.

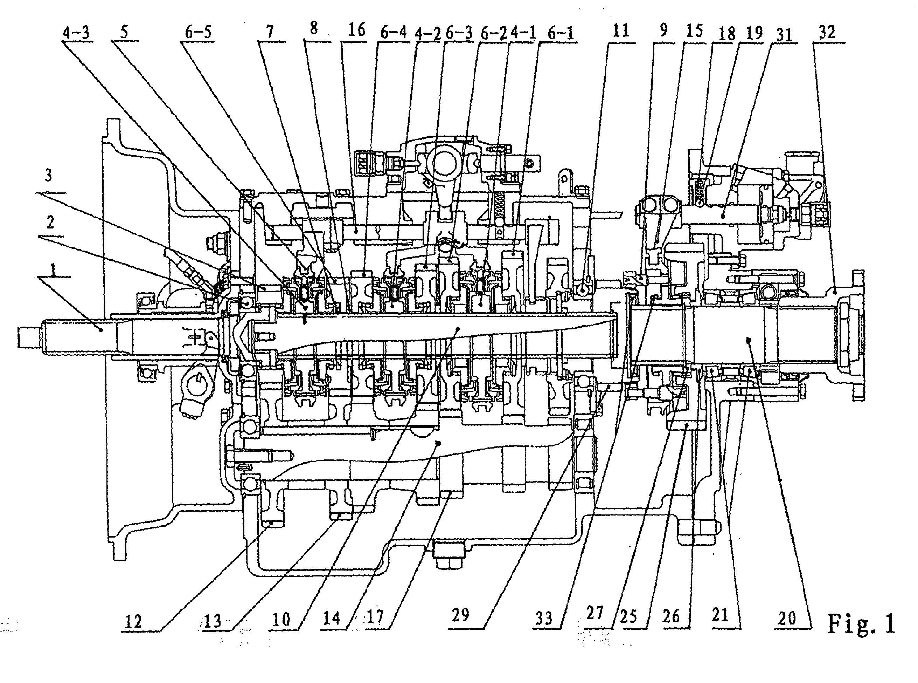

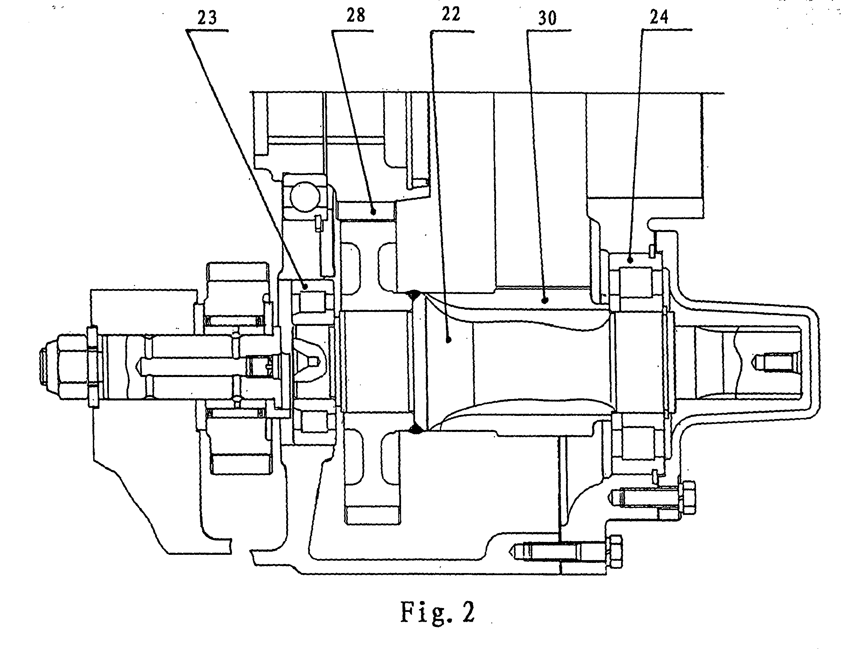

As shown in figures 1 and 2, the main-box-and-auxiliary-box-structural twin-countershaft twelve-speed transmission comprises mainly a main box and an auxiliary box. The main box has an input shaft 1 which is supported in the housing by means of a bearing 2. A main shaft 10 is arranged adjacently to the right end of the input shaft, and is supported in the housing by means of bearings 11. Two identical countershafts 14 are arranged on the both sides of the main shaft symmetrically, and are also supported in the housing by means of bearings at their two ends. At the right end of the input shaft is arranged an input-shaft gear 3, which engages with drive gears 12 at the left end of the countershafts. The other drive gears 13, 17 on the countershafts engage with five gears 6-1, 6-2, 6-3, 6-4, 6-5 on the main shaft 10 and the reverse gear respectively. Each gear (for example the fifth speed gear 6-5) on the main shaft is connected to the main shaft 10 by means of a main-shaft-gear spline gasket 7 and a main-shaft-gear space gasket 8, and thus it is positioned independently, and it has a radial clearness for compensating its radial offset which is resulted from the machining tolerance and the montage tolerance of the gears on the two countershafts, so that the gears engage with one another comfortably and without rigid interference. The four gears on the left portion of the countershafts are connected with the countershafts firmly by means of a single key and a big interference fit, and the three gears 17 on the right portion of the countershafts are formed integrally with the countershaft by directly machining teeth on the countershaft. Between every two gears on the main shaft is arranged a synchronizer 4, and thus totally three synchronizers 4-1, 4-2, 4-3 are arranged. Each synchronizer is provided with a shift fork 5 which is mounted on a shift fork shaft 16 which is connected to a shift lever via an operation mechanism. As shown in figure 2, the auxiliary box has an auxiliary-box main shaft 20 which is supported in a rear cover of the housing by means of a bearing 21. An auxiliary-box-main-shaft reduction gear 25 is connected to the auxiliary-box main shaft 20 by means of an auxiliary-box-main-shaft press plate 26 and an auxiliary-box-main-shaft gasket 27. On both sides of the auxiliary-box main shaft are arranged an auxiliary-box countershaft 22 and an auxiliary-box prolonged countershaft (according to requirements of customers, there can be provided two identical auxiliary-box countershafts too) symmetrically. The auxiliary-box countershaft 22 is mounted in the main box and in the rear cover by means of bearings 23, 24 respectively, and an auxiliary-box-countershaft drive gear 28 is welded at the left end of the auxiliary-box countershaft. The gear 28 engages with a drive gear 29 on the main shaft for the auxiliary box. The shaft gear 30 in the right portion of the auxiliary-box countershaft 22 is formed by directly machining teeth on the auxiliary-box countershaft, and it engages with the auxiliary-box-main-shaft reduction gear 25. Between the auxiliary-box-main-shaft reduction gear 25 and the drive gear 29 for the auxiliary box is arranged a synchronizer 9, which is provided with a back-taper-tooth mechanism 33 for self-locking. A shift fork 15 in the synchronizer 9 is supported on a shift fork shaft 31, which is provided with a self-locking mechanism comprising a self-locking spring 13 and a self-locking steel ball 19. The right end of the auxiliary-box main shaft is an output, which is connected to the automotive drive shaft via a flange disc 32.

The operation process of the transmission according to the present invention is as below: in the course of driving, after the driver shifts the transmission to a neutral position, the transmission runs in the state as shown in figures 1 and 2.

At this time, the power is transferred from the engine via a clutch to the input shaft 1, and then via a spline key to the input-shaft gear 3, and then to the countershafts 14 by engagement of the input-shaft gear 3 with the drive gears 12 on the countershafts. Since the speed gears on the countershafts are fixed with the countershafts, they rotate together with the countershafts. The speed gears on the countershafts drive the speed gears on the main shaft to rotate with. Since the synchronizers are located in a neutral position respectively, the speed gears on the main shaft rotate freely, and hence no power is output from the main shaft 10.

In the case where the driver operates the shift lever in the steering room to shift the transmission into the fifth speed, he operates the fifth-sixth shift fork shaft via a gear mechanism for the shift lever system, and thus the fifth-sixth shift fork 5 is moved in the right direction, and then the shift fork feet move a synchronizer slide coupling 31 axially. At this time, two pairs of sliding friction surfaces in the taper structure of the fifth-speed synchronizer begin to operate. When the relative angular speed between the fifth-speed gear and the main shaft reduces to about zero, the inner spline key in the synchronizer slide coupling engages with the outer spline key in the fifth-speed gear. Until know, the gearshifting process is completed successfully. The power is transferred from the engine via the clutch to the input shaft, and then to the input-shaft gear 3 via a spline key, and then to two countershaft drive gears 12 which are arranged symmetrically, and then to the synchronizer slide coupling and the main shaft 10 via a spline key engagement, and then to the drive gear 29 for the auxiliary box, and thus is transferred into the auxiliary box, and then from the auxiliary box to the flange disc 32 and at last is sent out from the flange disc.

## Claims

1. Main-box-and-auxiliary-box-structural twin-countershaft twelve-speed transmission, with a main box and an auxiliary box mainly,
said main box having an input shaft (1) which is followed by a main shaft (10) at one of its ends, at the two sides of the main shaft being arranged symmetrically two identical countershafts (14), a gear (3) on the input shaft engaging with gears (12) in the countershafts, the other gears on the countershafts engaging with corresponding gears (6) on the main shaft respectively, there being provided three synchronizers (4) on the main shaft, the gears (6) on the main shaft being arranged at the two sides of the synchronizers respectively, the synchronizers being provided with a shift fork (5) respectively, a shift fork shaft (16) being connected to a shift lever via an operation mechanism,
the auxiliary box having an auxiliary-box main shaft (20) and an auxiliary-box countershaft (22) mainly, a drive gear (29) on the main shaft (10) for the auxiliary box engaging with an auxiliary-box drive gear (28) on the auxiliary-box countershaft, an auxiliary-box-main-shaft reduction gear (25) engaging with a shaft gear (30) on the auxiliary-box countershaft, between the reduction gear (25) and the drive gear (29) being arranged a synchronizer (9) which is operated by means of a shift fork (15) and a shift fork shaft (31), the other end of the auxiliary-box main shaft being connected with a flange disc (32),
**characterized in that** an additional synchronizer (4-1) is arranged in the extension of the main shaft (10) in the main box, and an additional gear (6-1) is arranged at the right side of the additional synchronizer, thus a main-box-and-auxiliary-box-structural twin-countershaft twelve-speed transmission, in which the main box provides six speeds and the auxiliary box provides two speeds, is designed.

2. Main-box-and-auxiliary-box-structural twin-countershaft twelve-speed transmission according to claim 1, **characterized in that** the gears in the auxiliary box are double self-locked, that is to say, a self-locking mechanism comprising back taper teeth (33) arranged in the synchronizer (9) and a self-locking mechanism comprising a self-locking spring (18) arranged in the shift fork shaft (31) and a self-locking steel ball (19) are provided.

3. Main-box-and-auxiliary-box-structural twin-countershaft twelve-speed transmission according to claim 1, **characterized in that** each gear on the main shaft (10) in the main box is provided with a spline gasket (7) and a space gasket (8) at its left and right sides, and thus it is positioned independently.
